# EUROPÄISCHE PATENTSCHRIFT

(11) **EP 0 976 500 B1**
(45) Veröffentlichungstag und Bekanntmachung des Hinweises auf die Patenterteilung: **26.10.2005**
(21) Anmeldenummer: 99111710.2
(22) Anmeldetag: 17.06.1999
(51) Int. Cl.: B24C 11/00, A61C 13/12, A61C 13/00, A61C 3/025, A61C 13/083

(54) **Verwendung eines Strahlmittels auf Basis silikatischer Dentalkeramik**
Use of a dental silicate ceramic based abrasive
Utilisation d'un matériau abrasif à base de céramique de silicate dentaire

(30) Priorität: 29.07.1998 DE 19834106
(43) Veröffentlichungstag der Anmeldung: 02.02.2000
(73) Patentinhaber: DeguDent GmbH, 63457 Hanau (DE); DUCERA Dental GmbH u.Co.KG, 61191 Rosbach v.d.H. (DE)
(72) Erfinder: Komma, Ottmar, 61194 Niddatal (DE)
(74) Vertreter: Stoffregen, Hans-Herbert

(56) Entgegenhaltungen:
- EP-A- 0 332 887
- DE-A- 3 802 042
- DE-A- 19 606 492
- DE-C- 19 626 440

## Beschreibung

Die Erfindung bezieht sich auf die Verwendung eines Strahlmittels in der Dentaltechnik.

Aus der DE 38 02 042 A1 ist ein Verfahren zur Vorbereitung einer Substratoberfläche für die Verbindung mit Kunststoff bekannt.

Die EP 0 332 887 A2 bezieht sich auf ein Verfahren zur Herstellung von metallkeramischen Dentalrestaurationen, um bessere ästhetische Ergebnisse zu erzielen.

Mit Kunststoff überzogene Dentalprothesenteile und Verfahren zu ihrer Herstellung sind aus der DE 196 06 492 A1 bekannt.

Nach der RU- 2 025 263 C1 wird ein Strahlmittel zum Behandeln von Metalloberflächen vorgeschlagen, das aus kugelförmigen Verbrennungsaschepartikeln aus einem Kohlewärme-Kraftwerk besteht. Die Aschepartikel einer Größe zwischen 5 µm und 1 mm beinhalten 55 bis 60 Gew.-% SiO₂, 20 bis 22 Gew.-% Al₂O₃, 3 bis 5 Gew.-% CaO, 1 bis 2 Gew.-% Na₂O, 1 bis 3 Gew.-% MgO und 2 bis 4 Gew.-% K₂O.

Nach dem Stand der Technik werden individuelle Metallgerüste für Zahnersatz nach dem Wachsausschmelzverfahren hergestellt. Hierbei wird das spätere Metallgerüst zuerst in Wachs im Maßstab 1:1 modelliert, mit Angußkanälen versehen und in einer handelsüblichen feuerfesten Einbettmasse in eine Ringmuffel eingebettet.

Nach der Abbindereaktion der Einbettmasse wird die Ringmuffel in geeigneten Ausbrennöfen erwärmt, um das Wachs vollständig auszutreiben und eine Hohlform zu erzeugen. In diese wird eine schmelzflüssige Dentallegierung mittels Gußschleuder eingebracht.

Nach dem Abkühlen und Entfernen der Einbettmasse vom zahntechnischen Metallgerüst wird dieses mit rotierenden Instrumenten ausgearbeitet und auf Passung auf dem Meistermodell überprüft. In der Regel folgt nun das Abstrahlen mit einem Strahlmittel, gefolgt von einem Oxidationsvorgang und einem nochmaligen Abstrahlschritt. Als Strahlmittel wird hierbei überwiegend Aluminiumoxid (Al₂O₃) mit Partikelgröße von ca. 110 µm verwendet. Zweck dieser Oberflächenbehandlung ist die Verbesserung des Haftverbundes zwischen der ersten aufgebrannten keramischen Schicht (Opaker) und der Legierung durch Retention (aufgerauhte Oberfläche) sowie durch Ausbildung von Haftoxiden (Oxidbrand). Durch Auftragen des Dentinkerns sowie der Schneidemasse, jeweils gefolgt von Ofenbränden, wird der natürliche Zahn abschließend so natürlich wie möglich nachgebildet.

Um einen guten Verbund zwischen Legierung und Keramik zu gewährleisten, wird von Dentalkeramikherstellern darüber hinaus ein sogenannter Haftbrand empfohlen. Für diesen wird zunächst, wie bei der normalen Vorgehensweise, eine dünne Opakerschicht auf die Legierung aufgetragen und anschließend bei erhöhten Temperaturen, nämlich ca. 30 - 50 °C über der normalen Brenntemperatur, gebrannt. Der Opaker wird so in einen niedrigviskosen Zustand überführt, wodurch alle Kavitäten und Unebenheiten auf der Legierungsoberfläche benetzt werden. Nach dem Abkühlen bildet sich ein glänzender, glatter Keramiküberzug auf dem Metallgerüst. Je nach Hersteller kann der Haftbrand auch mit einer speziell hierfür angebotenen, als Haftbonder bezeichneten Zusammensetzung durchgeführt werden.

Ein Überbrennen des Opakers ist bei den klassischen dentalen Standardlegierungen bezüglich Warmfestigkeit, Gerüstverzug und Passgenauigkeit unproblematisch, da trotz erhöhter Brenntemperatur (z.B. 980 °C) der Abstand zum Soliduspunkt der Legierung mehr als 200 °C beträgt. Anders sieht es jedoch bei den seit einigen Jahren auf dem Markt befindlichen sogenannten Bio-Legierungen aus. Dieser Legierungstyp hat einen Goldanteil von über 75 Gew.-% und ist demnach goldfarben. Dadurch ist legierungstechnisch bedingt, daß der Soliduspunkt gegenüber den klassischen Dentallegierungen um 250 bis 350 °C auf einen Absolutwert zwischen 900 und 1000 °C abgesenkt ist. Die Biolegierungen werden mit speziell entwickelten, niedrigschmelzenden Keramiken verblendet, um die Gerüststabilität und Kompatibilität der Wärmeausdehnungskoeffizienten zu gewährleisten.

Ein Haftbrand analog der für die klassischen Dentallegierungen üblichen Technik des Überbrennens erhöht die Wahrscheinlichkeit der Verzugsbildung im Dentalgerüst und wird aus diesem Grund für die Biolegierungen bei entsprechend niedrigerer Temperatur durchgeführt.

In Kombination mit der für diese neuen Legierungstypen eingeführten Praxis des "Probetragens des Zahnersatzes" wird jedoch eine vermehrte Blasenbildung beim Schlußbrand im Vergleich zu den klassischen Metallkeramiksystemen beobachtet. Bei dieser Vorgehensweise wird der Zahnersatz vom Zahnarzt dem Patienten für einen gewissen Zeitraum (einige Tage bis einige Monate) zwecks Überprüfung der Biokompatibilität und Okklusion temporär eingesetzt. Nach dieser Prüfungszeit gelangt die zahntechnische Arbeit (Krone oder Brücke) wieder ins zahntechnische Labor und wird nach zahnärztlichen Vorgaben korrigiert und letztlich einem Schluß- oder Glanzbrand unterzogen.

Beim Abstrahlen der Metallgerüste verbleiben Reste des Strahlmittels auf bzw. in der Legierungsoberfläche, was durch rasterelektronenmikroskopische Untersuchung und Röntgenfluoreszenzanalyse nachgewiesen werden kann. Es wird angenommen, daß bei Verwendung von Al₂O₃-Strahlmittel, aber auch anderen hierfür grundsätzlich geeigneten inerten Hartstoffen wie Siliziumcarbid (SiC) oder Borcarbid (B₄C), es in Verbindung mit den weiteren Schritten der Oberflächenkonditionierung zur Ausbildung von Restporenkanälen zwischen Legierung und erster Keramikschicht (Opaker bzw. Haftbonder) kommt. In diese wird Feuchtigkeit durch Kapillarkräfte eingesaugt und erzeugt beim anschließenden Korrekturbrand die vielfach in der Praxis beobachteten Blasen nach dem Probetragen.

Überraschenderweise wurde gefunden, daß nach Substitution der standardmäßig verwendeten Strahlmittel durch ein Strahlmittel auf Basis silikatischer Dentalkeramik die Blasenbildung nach Probetragen und anschließendem Korrekturbrand vollständig unterdrückt werden kann. Der Nachteil der metallkeramischen Biolegierungen gegenüber den herkömmlichen hochschmelzenden Legierung-Verblendkeramik-Systemen wird so eliminiert.

Der Kern der Erfindung besteht darin, ein glaskeramisches silikatisches Strahlmittel gefunden zu haben, welches die Benetzungseigenschafteh zwischen Legierung und Keramik (Opaker) im Vergleich zum konventionell verwendeten Al₂O₃-Strahlmittel verbessert. Im Gegensatz zu letzterem wird die Kontaktschicht zwischen den beiden Komponenten vollständig "versiegelt".

Gegenstand der Erfindung ist somit die Verwendung eines Strahlmittels aus feinteiliger silikatischer Dentalkeramik mit einer zusammensetzung aus
- 40 - 98 Gew.%: SiO₂
- 2 - 25 Gew.%: Me(III)₂O₃
- 0 - 30 Gew.%: Me(I)₂O
- 0 - 20 Gew.%: Me(II)O
- 0 - 30 Gew.%: Me (IV)O₂
- 0 - 8 Gew.%: B₂O₃
- 0 - 15 Gew.%: P₂O₅
- 0 - 3 Gew.%: F
wobei
Me(III)₂0₃ für Al₂0₃, La₂0₃ und Sb₂0₃;
Me(I)₂0 für K₂0, Na₂0 und Li₂0;
Me(II)0 für Ca0, Ba0, Mg0, Zn0 und Sr0; und
Me (IV)0₂ für Ti0₂, Zr0₂, Ce0₂ und Sn0₂ steht
zur Oberflächenkonditionierung von mit Dentalkeramik zu verblendenden Metallgerüsten in niedrigschmelzenden Legierungs-Aufbrennkeramik-Systemen.

Als Strahlmittel im Sinne der Erfindung ist im Grundsatz jede silikatische Dentalkeramik geeignet, sofern sie bei im wesentlichen homogener Zusammensetzung der Kerämikbestandteile in für Strahlmittel üblicher partikulärer Form zur Verfügung steht. Dies setzt voraus, daß die Dentalkeramik nach der Sinterung oder aus der Schmelze in feinteiliger Form vorliegt oder zu entsprechender Partikelgröße vermahlen werden kann, was in aller Regel gegeben ist.

Das erfindungsgemäße Strahlmittel weist zweckmäßigerweise eine Partikelgröße von 50 bis 200 µM, vorzugsweise 100 bis 150 µm, auf.

Die Strahlmittelteilchen sind in ihrer äußeren Gestalt unregelmäßig und meist splitterförmig.

Besonders bevorzugt hat das Strahlmittel die Zusammensetzung:
- 56 - 63 Gew.%: SiO₂
- 8 - 24 Gew.%: Al₂O₃
- 7 - 14 Gew.%: K₂O
- 4 - 14 Gew.%: Na₂O
- 0 - 2 Gew.%: Li₂O
- 0 - 8 Gew.%: B₂O₃
- 0 - 1,5 Gew.%: CaO
- 0 - 1,5 Gew.%: TiO₂
- 0 - 0,5 Gew.%: CeO₂
- 0 - 0,6 Gew.%: Sb₂O₃
- 0 - 3 Gew.%: F

Es wird angenommen, daß die beim Abstrahlen von dentalen Metallgerüsten mit dem erfindungsgemäßen Strahlmittel auf bzw. in der Metalloberfläche verbleibenden Strahlmittelreste zu einem intensiven Verbund der Aufbrennkeramik mit dem Metallgerüst führt. Dies zeigt sich unter anderem in gegenüber mit Al₂0₃ abgestrahlten Gerüsten einer deutlichen Erhöhung oder Haftwerte. Insbesondere bilden sich hierbei, im Gegensatz zu Al₂0₃-Strahlmittel, keine Restporenkanäle, in die später Feuchtigkeit eingezogen wird, die bei einem späteren Schlußbrand zu Blasenbildung führen kann. Stattdessen gewährleistet das dentalkeramische Strahlmittel, daß die Kontaktschicht zwischen Metallgerüst und Keramik (Opaker) porenfrei und vollständig "versiegelt" ist.

Das Strahlmittel kann erfindungsgemäß bei der Oberflächenkonditionierung von mit Dentalkeramik zu verblendenden Metallgerüsten verwendet werden. Dieser Vorteil macht sich bei niedrigschmelzenden Legierungs-Aufbrennkeramik-Systemen bemerkbar.

Durch die komplette Versiegelung der Kontaktschicht Opaker-Legierung wird das Eindringen von Feuchtigkeit in dieselbe verhindert; die Blasenbildung nach Probetragen und anschließendem Korrektur-bzw.Schlußbrand wird unterbunden.

Der Abstrahlvorgang mit dem Strahlmittel erfolgt unter Standardbedingungen mit den hierfür üblichen Einrichtungen.

### Beispiel 1

Die nachfolgende Tabelle 1 zeigt die Zusammensetzungen von Strahlmitteln auf Basis feinteiliger (100-150 µm) silikatischer Dentalkeramik.

Diese werden durch Abschrecken von Schmelzen entsprechend zusammengesetzter keramischer Massen in Wasser, anschließendes Vermahlen, z. B. in einer Kugelmühle, und Klassieren des gewünschten Teilchengrößenbereiches erhalten.

**Tabelle 1**

| Strahlmittel Partikelgröße 100-150 µm | Nr. 1 | Nr. 2 | Nr.3 |
|---|---|---|---|
| SiO₂ | 58,1 | 62,4 | 57,8 |
| Al₂O₃ | 14,1 | 8,8 | 22,2 |
| K₂O | 13,0 | 11,6 | 8,9 |
| Na₂O | 5,7 | 10,6 | 11,0 |
| Li₂O | 0,9 | 1,0 | - |
| B₂O₃ | 6,9 | 1,0 | - |
| CaO | 0,4 | 1,0 | 0,1 |
| TiO₂ | 0,1 | 1,1 | - |
| CeO₂ | 0,3 | 0,2 | - |
| Sb₂O₃ | 0,4 | 0,3 | - |
| F | - | 2 | - |

### Beispiel 2:

Um die Blasenbildung nach Probetragen im Labor zu simulieren, wurde folgendes Experiment durchgeführt:

Herstellung und Verblendung von Kronen erfolgte nach üblicher Arbeitsanleitung bzw. Herstellerangaben aus einer handelsüblichen niedrigschmelzenden hochgoldhaltigen Dentallegierung (Degunorm®, Degussa) und einem handelsüblichen Pastenopaker auf Basis niedrigschmelzender Dentalkeramik (Duceragold®, Ducera). Jeweils 10 Kronen wurden mit den Strahlmitteln gemäß

Beispiel 1 und im Vergleich mit Al₂O₃ (110 µm) sowie mit SiC (110 µm) und B₄C (110 µm) abgestrahlt. Gearbeitet wurde mit einem kommerziellen Abstrahlgerät der Firma Bego (Ministar; Druck: 2 bar; 1,2 mm Strahldüse).
Die Kronen wurden anschließend unter Druck (6 bar) bei 80 °C in künstlichem Speichel für 20 h eingelagert. Nach dieser Behandlung wurden die Kronen kurz getrocknet und anschließend nochmals gebrannt (Korrekturbrand). Die Ergebnisse sind in Abhängigkeit des verwendeten Strahlmittels in Tabelle 2 zusammengefaßt.

**Tabelle 2**

| Strahlmittel | Anzahl der defekten Kronen |
|---|---|
| Strahlmittel Nr. 1 | 0 |
| Strahlmittel Nr. 2 | 0 |
| Strahlmittel Nr. 3 | 0 |
| Al₂0₃ | 10 |
| SiC | 10 |
| B₄C | 10 |

## Patentansprüche

1. Verwendung eines Strahlmittels aus feinteiliger silikatischer Dentalkeramik mit einer Zusammensetzung aus
40 - 98 Gew.% SiO₂,
2 - 25 Gew.% Me(III)₂O₃
0 - 30 Gew.% Me(I) ₂O
0 - 20 Gew.% Me(II) O
0 - 30 Gew.% Me(IV)O₂
0 - 8 Gew.% B₂O₃
0 - 15 Gew.% P₂O₅
0 - 3 Gew.% F
wobei
Me (III)₂O₃ für Al₂O₃, La₂O₃ und Sb₂O₃;
Me (I)₂O für K₂O, Na₂O und Li₂O;
Me (II)O für CaO, BaO, MgO, ZnO und SrO und
Me (IV)O₂ für TiO₂, ZrO₂, CeO₂ und SnO₂ steht,
zur Oberflächenkonditionierung von mit Dentalkeramik zu verblendenden Metallgerüsten in niedrigschmelzenden Legierungs-Aufbrennkeramik-Systemen.

2. Verwendung des Strahlmittels nach Anspruch 1, das aus
56 - 63 Gew.% SiO₂
8 - 24 Gew.% Al₂O₃
7 - 14 Gew.% K₂O
4 - 14 Gew.% Na₂O
0 - 2 Gew.% Li₂O
0 - 8 Gew.% B₂O₃
0 - 1,5 Gew.% CaO
0 - 1,5 Gew.% TiO₂
0 - 0,5 Gew.% CeO₂
0 - 0,6 Gew.% Sb₂O₃
0 - 3 Gew.% F
besteht.

3. Verwendung des Strahlmittels nach Anspruch 1 oder 2, wobei das Strahlmittel eine Partikelgröße von 50 bis 200 µm, vorzugsweise 100 bis 150 mm, aufweist.

## Claims

1. Use of a blasting medium made of fine-particle silicate dental ceramic consisting of
40 - 98 wt.% SiO₂
2 - 25 wt.% Me (III)₂O₃
0 - 30 wt.% Me (I) ₂O
0 - 20 wt.% Me (II) O
0 - 30 wt.% Me (IV)O₂
0 - 8 wt.% B₂O₃
0 - 15 wt.% P₂O₅
0 - 3 wt.% F
where
Me (III)₂O₃ stands for Al₂O₃, La₂O₃ and Sb₂O₃ ;
Me (I)₂O for K₂O, Na₂O and Li₂O ;
Me (II)O for CaO, BaO, MgO, ZnO and SrO, and
Me (IV)O₂ for TiO₂, ZrO₂, CeO₂ and SnO₂,
for surface conditioning of metal substructures to be faced with dental ceramic in low-meltable alloy-fired-on-ceramic systems.

2. Use of the blasting medium according to claim 1, that consists of
56 - 63 wt.% SiO₂
8 - 24 wt.% Al₂O₃
7 - 14 wt.% K₂O
4 - 14 wt.% Na₂O
0- 2 wt.% Li₂O
0- 8 wt.% B₂O₃
0- 1,5 wt.% CaO
0- 1,5 wt.% TiO₂
0- 0,5 wt.% CeO₂
0- 0,6 wt.% Sb₂O₃
0- 3 wt.% F

3. Use of the blasting medium according to claim 1 or 2, whereby the blasting medium has a particle size from 50 to 200 µm, preferably 100 to 150 mm.

## Revendications

1. Utilisation d'un agent de grenaillage en céramique dentaire de silicate fin composé de
40 - 98 % pondéral SiO₂
2 - 25 % pondéral Me (III)₂O₃
0 - 30 % pondéral Me (I)₂O
0 - 20 % pondéral Me (II) O
0 - 30 % pondéral Me (IV)O₂
0 - 8 % pondéral B₂O₃
0 - 15 % pondéral P₂O₅
0 - 3 % pondéral F
sachant que
Me (III)₂O₃ correspond à Al₂O₃, La₂O₃ et Sb₂O₃ ;
Me (I)₂O à K₂O, Na₂O et Li₂O ;
Me (II)O à CaO, BaO, MgO, ZnO et SrO, et
Me (IV)O₂ à TiO₂, ZrO₂, CeO₂ et SnO₂,
pour le conditionnement de surfaces de la base métallique à recouvrir de céramique dentaire dans des systèmes de céramique d'alliage à point de fusion bas.

2. Utilisation de l'agent de grenaillage selon la revendication 1, composé de
56 - 63 % pondéral SiO₂
8 - 24 % pondéral Al₂O₃
7 - 14 % pondéral K₂O
4 - 14 % pondéral Na₂O
0 - 2 % pondéral Li₂O
0 - 8 % pondéral B₂O₃
0 - 1,5 % pondéral CaO
0 - 1,5 % pondéral TiO₂
0 - 0,5 % pondéral CeO₂
0 - 0,6 % pondéral Sb₂O₃
0 - 3 % pondéral F

3. Utilisation de l'agent de grenaillage selon la revendication 1 ou 2, sachant que l'agent de grenaillage présente une taille de particules comprise entre 50 et 200 µm, de préférence entre 100 et 150 µm.
